# EUROPEAN PATENT APPLICATION

(11) **EP 4 391 520 A1**
(43) Date of publication of application: **26.06.2024**
(21) Application number: 22857503.1
(22) Date of filing: 20.07.2022
(51) Int. Cl.: H04N 5/265, G06T 7/11, G06N 3/04, G06N 3/08

(54) **ALL-IN-FOCUS IMAGE SYNTHESIS METHOD, STORAGE MEDIUM AND SMART PHONE**

(30) Priority: 19.08.2021 CN 202110953450
(71) Applicant: Huizhou TCL Cloud Internet Corporation Technology Co., Ltd., Huizhou, Guangdong 516006 (CN)
(72) Inventor: ZHU, Xiaopu, Guangdong 516006 (CN)
(74) Representative: Petraz, Gilberto Luigi
(86) International application number: PCT/CN2022/106869
(87) International publication number: WO 2023/020190

(57) **Abstract**

A panoramic image synthesis method, a storage medium, and a smartphone are provided. The panoramic image synthesis method includes steps of: obtaining a first image and a second image correspondingly by locking focus in a face and a farthest point of a lens respectively when a photo is taken; obtaining a portrait area image by performing portrait segmentation processing on the first image; and obtaining a merged image by aligning and merging the portrait area image and the second image. In the invention, a clear portrait and a clear background within a panoramic depth range are implemented.

## Description

This application claims the priority of Chinese Patent Application No. 202110953450.2, entitled "PANORAMIC DEPTH IMAGE SYNTHESIS METHOD, STORAGE MEDIUM, AND SMARTPHONE", filed on August 19, 2021 in the China National Intellectual Property Administration (CNIPA), the content of which is incorporated herein by reference in its entirety.

### TECHNICAL FIELD

The present disclosure relates to an image synthesis technology field, and more particularly to a panoramic image synthesis method, a storage medium, and a smartphone.

### BACKGROUND ART

Currently, a front-facing selfie camera of a smartphone device is equipped with an autofocus function. This can effectively improve clarity of a face or faces when taking photos. However, due to a limited depth of field range of the front camera, when a focus point is on the face, a background image is outside an effective depth of field, resulting in a blurred background.

Consequently, the prior art still needs to be improved and developed.

### SUMMARY OF DISCLOSURE

### TECHNICAL PROBLEM

Embodiments of the present disclosure provide a paging cycle adjusting method, a storage medium, and an electronic terminal capable of meeting different service requirements of the electronic terminal.

### SOLUTION OF PROBLEM

### TECHNICAL SOLUTION

To solve the above-mentioned technical problem, the technical solution is described as follows.

A panoramic depth image synthesis method, wherein the method includes the step of:
obtaining a first image and a second image correspondingly by locking focus in a face and a farthest point of a lens respectively when a photo is taken;
obtaining a portrait area image by performing portrait segmentation processing on the first image; and
obtaining a merged image by aligning and merging the portrait area image and the second image.

In panoramic depth image synthesis method, the first image is a face focus image, and the step of obtaining the face focus image includes:
activating a camera and detecting whether a camera preview lens contains face data; and
obtaining the face focus image by activating a face focus mode to take a photo when it is detected that the camera preview lens contains the face data.

In panoramic depth image synthesis method, the second image is a distance focus image, and the step of obtaining the distance focus image includes:
obtaining the distance focus image by activating a distance focus mode to take a photo, after the face focus mode is activated to take the photo to obtain the face focus image.

In panoramic depth image synthesis method, the method further includes the step of:
obtaining a close-up image by activating a close-up focus mode when it is detected that the camera preview lens does not contain the face data.

In panoramic depth image synthesis method, the step of obtaining the portrait area image by performing the portrait segmentation processing on the first image includes the steps of:
using annotated image data containing a face is used as a training sample to train an image segmentation neural network, and obtaining a trained image segmentation neural network; and
obtaining the portrait area image by inputting the first image into the trained image segmentation neural network to perform image segmentation.

In panoramic depth image synthesis method, the step of using the annotated image data containing the face as the training sample to train the image segmentation neural network and obtaining the trained image segmentation neural network includes the steps of:
using the image segmentation network for obtaining a target area where at least one portrait in a training image is located, and obtaining position information of the portrait which needs to be segmented in the target area, wherein the training image is marked with position annotation information of the portrait which needs to be segmented; and
training the image segmentation neural network to obtain the trained image segmentation neural network based on the position information of the portrait which needs to be segmented and the position annotation information of the portrait which needs to be segmented.

In panoramic depth image synthesis method, the step of inputting the first image into the trained image segmentation neural network to perform image segmentation and obtaining the portrait area image includes:
obtaining the first image; and
using the trained image segmentation neural network to obtain the target area where the at least one portrait in the first image is located, to obtain the position information of the portrait which needs to be segmented in the target area, and to obtain the portrait area image based on the location information of the portrait.

In panoramic depth image synthesis method, the step of aligning and merging the portrait area image and the second image to obtain the merged image includes:
using a pixel alignment algorithm, calculating an offset of the portrait area image relative to the second image, and performing a pixel replacement of the portrait area image on the corresponding pixels of the second image to obtain the merged image.

A storage medium, wherein the storage medium stores one or more programs, and the one or more programs are executed by one or more processors to implement the steps in the panoramic depth image synthesis method of the present disclosure.

A smartphone, wherein the smartphone includes a processor adapted to implement each instruction; and a storage medium adapted to store a plurality of instructions; and wherein the instructions are adapted to be loaded by the processor and executed in the steps of the panoramic depth image synthesis method of the present disclosure.

### ADVANTAGEOUS EFFECTS OF DISCLOSURE

### ADVANTAGEOUS EFFECTS

The present disclosure provides the panoramic depth image synthesis method. When the photos are taken, the focuses are locked to the face and the farthest point of the lens, respectively, to obtain the first image (the face focus image) and the second image (the distance focus image). The portrait segmentation processing is performed on the first image to obtain the portrait area image. The portrait area image and the second image are aligned and merged to obtain the fused image. In the present disclosure, by taking two focuses and photo, the portrait focus image and the distance focus image are user respectively. The face focus image is segmented by the AI and merged into the distance focus image, thereby achieving the clear portrait and the clear background within the panoramic depth range.

### BRIEF DESCRIPTION OF DRAWINGS

### DESCRIPTION OF DRAWINGS

To describe the technical solutions in the embodiments of the present disclosure more clearly, the following briefly introduces the accompanying drawings required for describing the embodiments. Apparently, the accompanying drawings in the following description show merely some embodiments of the present disclosure, and those skilled in the art can still derive other drawings from these accompanying drawings without creative efforts.
FIG. 1 illustrates a schematic a flow chart of a panoramic depth image synthesis method.
FIG. 2 illustrates a functional block diagram of a smartphone of the present disclosure.

### DETAILED DESCRIPTION OF EMBODIMENTS

To describe the technical solutions of the embodiments of the present disclosure more clearly, the following briefly introduces the accompanying drawings required for describing the embodiments. Apparently, the accompanying drawings in the following description show only some embodiments of the present disclosure, and those skilled in the art may still derive other drawings from these accompanying drawings without creative efforts.

The present disclosure provides a panoramic image synthesis method, a storage medium, and a smartphone. To make the objectives, technical schemes, and technical effect of the present disclosure more clearly and definitely, the present disclosure will be described in detail below by using embodiments in conjunction with the appending drawings. It should be understood that the specific embodiments described herein are merely for explaining the present disclosure but not intended to limit the present disclosure.

Those skilled in the art can appreciated that the singular forms "a", "an" and "the" are intended to include the plural forms as well, unless the context clearly indicates otherwise. It will be further understood that the term "comprises", when used in this specification, specifies the presence of stated features, integers, steps, operations, elements, and/or components, but does not preclude the presence or addition of one or more other features, integers, steps, operations, elements, components, and/or groups thereof. It will be understood that when we refer to an element being "connected" or "coupled" to another element, it can be directly connected or coupled to the other element or intervening elements can also be present. Furthermore, "connected" or "coupled" as used herein can include wireless connections or wireless couplings. As used herein, the term "and/or" includes all or any unit and all combinations of one or more of the associated listed items.

It will be understood by those skilled in the art that, unless otherwise defined, all terms (including technical terms and scientific terms) used herein have the same meaning as commonly understood by one of ordinary skill in the art to which the present application belongs. It should also be understood that terms, such as those defined in general dictionaries, are to be understood to have meanings consistent with their meaning in the context of the prior art. Unless specifically defined as here, it will not be interpreted in an idealized or overly formal sense.

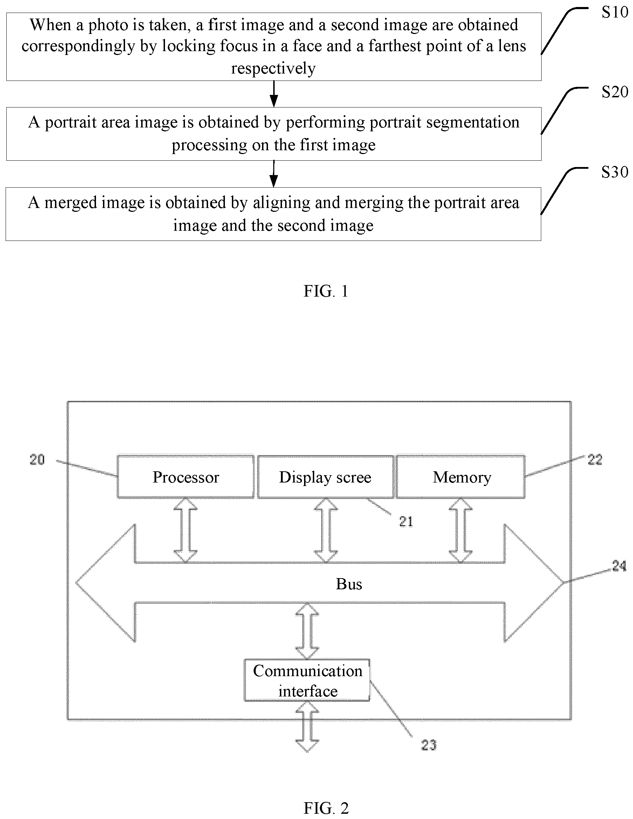

Please refer to FIG. 1. FIG. 1 illustrates a flow chart of a preferred embodiment of a panoramic depth image synthesis method provided by a present disclosure. As shown in FIG. 1, the flow chart includes the steps:
S10, when a photo is taken, a first image and a second image are obtained correspondingly by locking focus in a face and a farthest point of a lens respectively;
S20, a portrait area image is obtained by performing portrait segmentation processing on the first image; and
S30, a merged image is obtained by aligning and merging the portrait area image and the second image.

In the embodiment, during a photography process, the first image (a face focus image) and the second image (a distance focus image) are obtained by taking two focus photos and respectively using face focus and distance focus to take photos. Then, an AI portrait segmentation is performed on the face focus image and merged to the distance focus image to obtain the merged image, thereby implementing a clear portrait and a clear background within a panoramic depth range.

In some implementations, the first image is the face focus image, and the step of obtaining the face focus image includes: activating a camera and detecting whether a camera preview lens contains face data; obtaining the face focus image by activating a face focus mode to take a photo when it is detected that the camera preview lens contains the face data; and obtaining a close-up image by activating a close-up focus mode when it is detected that the camera preview lens does not contain the face data.

In some implementations, the second image is the distance focus image, and the step of obtaining the distance focus image includes: obtaining the distance focus image by activating a distance focus mode to take a photo, after the face focus mode is activated to take the photo to obtain the face focus image. In the embodiment, the distance focus mode usually means that focus is advanced to a farthest point of a lens, and the photo is taken after the focus converges.

In some implementations, step S20 including obtaining the portrait area image by performing the portrait segmentation processing on the first image specifically includes the steps:
S21, annotated image data containing a face is used as a training sample to train an image segmentation neural network, and a trained image segmentation neural network is obtained; and
S22, the portrait area image is obtained by inputting the first image into the trained image segmentation neural network to perform image segmentation.

The embodiment proposes an end-to-end trainable neural network to implement image segmentation processing. The end-to-end trainable neural network is called an image segmentation neural network. In the embodiment of the present disclosure, the image segmentation neural network to the first image (the face focus image) mainly includes the following two steps. In a first step, the first image is divided into multiple sections, and ROI covering all portraits in each of the sections is predicted. Herein, ROI refers to outlining an area which needs to be processed in the form of a box, a circle, an ellipse, an irregular polygon, etc. in an image which needs to be processed for subsequent processing in the second step. In a second step, each feature within each ROI is extracted, and a position of each portrait is accurately located. In the embodiment of the present disclosure, the image segmentation neural network can be applied to but is not limited to the following scenarios.

In a first scenario, a user transmits the collected first image containing the portrait to a cloud through a network, and the cloud uses the image segmentation neural network of the embodiment of the present disclosure to segment an image.

In a second scenario, the user inputs the collected first image containing the portrait into a local computer device, and the computer device uses the image segmentation neural network of the embodiment of the present disclosure to segment the image.

In some implementations, the step of using the annotated image data containing the face as a training sample to train the image segmentation neural network and obtaining the trained image segmentation neural network includes the following steps.

The image segmentation network is used for obtaining a target area where at least one portrait in a training image is located, and obtaining position information of the portrait which needs to be segmented in the target area. The training image is marked with position annotation information of the portrait which needs to be segmented. Based on the position information of the portrait which needs to be segmented and the position annotation information of the portrait which needs to be segmented, the image segmentation neural network is trained to obtain the trained image segmentation neural network.

Specifically, a number of training images is greater, and a training result of the image segmentation neural network is better. On the other hand, the number of the training images is larger, and a computer resource is consumed more. In practical applications, hundreds or more images containing human faces can be prepared as training images. In the meantime, it is necessary to obtain the position annotation information of the portrait which needs to be segmented in the training image. For example, pixels corresponding to the portrait which needs to be segmented are expressed in any way. For example, different portraits are marked with different colors, and the position annotation information of the portrait can be annotated by a person who can recognize the portrait through a graphic editing tool. Furthermore, the position annotation information needs to be converted into a required format, so that the position annotation information can be used for obtaining the position of the annotated portrait in the training image. Herein, the position annotation information is converted into the required format including but not limited to a heat map, a coordinate point and so on.

In the embodiment, the image segmentation neural network includes at least a first sub-network, a second sub-network, and a third sub-network. The first sub-network is used for obtaining a feature map of the training image, and the second sub-network is used for processing the feature map of the training image to obtain the target area where the at least one portrait in the training image is located. The third sub-network is used for obtaining the position information of the portrait which needs to be segmented in the target area.

In the embodiment, a structure of the first sub-network is not limited. Taking the retinal neural layer in an OCT image to be segmented, the VGG16 convolutional neural network is used for an example, and the training image is processed through a conv1 layer to conv5 layer of the network to obtain a feature map of W×H×C. W×H is a spatial size of the feature map, and C is a number of channels of the feature map.

In the embodiment, the second sub-network is used for dividing the sample image into multiple sections according to a target direction. The target direction at least includes a vertical direction or a horizontal direction. For any one of the plurality of sections, the ROI corresponding to the at least one portrait in any section is determined. The ROI is determined via a first boundary and a second boundary, and directions of the first boundary and the second boundary are perpendicular to the target direction. A target area where at least one portrait is located based on the ROI in the plurality of sections is determined. Herein, the multiple sections can be equal-width sections arranged in the vertical direction, or equal-width sections arranged in the horizontal direction. The first sub-network predicts an area covering all portraits in each equal-width section of the image as the ROI. Herein, a method of predicting the ROI includes but is not limited to a regression prediction heat map, a regression prediction coordinate, and a sliding window prediction.

In the embodiment, the third sub-network is used for performing feature extraction on any one of the plurality of sections for the ROI in any section, and a fixed-height feature vector is generated based on a feature extraction result. Based on the feature vector of the fixed height, the position information of the portrait which needs to be segmented in any section in obtained. Herein, the feature of the ROI area is extracted from the feature map through an ROIAlign layer or ROI Pooling layer, and the feature is mapped to a fixed-height feature vector to predict a precise position of the portrait in each ROI area. Herein, a method for predicting the precise position of the portrait includes but is not limited to a regression prediction heat map, a regression prediction coordinate, and a sliding window prediction. The number of portraits which needs to be segmented in the target area is one or more. When there are multiple portraits in the ROI, the precise position of each of the portraits is predicted separately.

In some implementations, based on the position information of the portrait which needs to be segmented and the position annotation information of the portrait which needs to be segmented, the image segmentation neural network is trained to obtain the trained image segmentation neural network.

Specifically, the position information of the portrait predicted in the above-mentioned step is inputted to a loss layer. The loss layer can adjust a parameter value of the image segmentation neural network according to the predicted position information of the portrait, thereby adjusting the parameter value of the image segmentation neural network. Specifically, based on the position information of the portrait which needs to be segmented and the position annotation information of the portrait which needs to be segmented, a first loss function value is obtained. It is determined whether the first loss function value satisfies a first preset condition. In response to the first loss function value not meeting the first preset condition and adjusting the parameter value of the image segmentation neural network based on the first loss function value, the following operation is performed iteratively until the first loss function value meets the first preset condition. The second sub-network is used in the image segmentation neural network to obtain the target area where the at least one portrait in the training image is located, and the third sub-network is used in the image segmentation neural network to obtain the position information of the portrait which needs to be segmented in the target area.

In some implementation, the step of inputting the first image into the trained image segmentation neural network to perform image segmentation and obtaining the portrait area image includes: obtaining the first image; using the trained image segmentation neural network to obtain the target area where the at least one portrait in the first image is located, to obtain the position information of the portrait which needs to be segmented in the target area, and to obtain the portrait area image based on the location information of the portrait.

In the embodiment, obtaining the target area where the at least one portrait in the first image is located includes: dividing the first image into the plurality of sections according to the target direction, which includes at least the vertical direction or the horizontal direction; for any one of the plurality of sections, and determining the ROI corresponding to the at least one portrait in any of the plurality of sections, and determining the ROI by the first boundary and the second boundary, wherein the first direction of the first boundary and the second boundary are perpendicular to the target direction; and determining the target area where the at least one portrait is located based on the ROI in the plurality of sections.

In the embodiment, obtaining the position information of the portrait to be segmented in the target area includes: performing the feature extraction on the ROI in any one of the plurality of sections, and generating the fixed-height feature vector based on the feature extraction result; and obtaining the position information of the portrait which needs to be segmented in any of the plurality of sections based on the feature vector of the fixed height.

In some implementations, the step of aligning and merging the portrait area image and the second image to obtain the merged image include: using a pixel alignment algorithm, calculating an offset of the portrait area image relative to the second image, and performing a pixel replacement of the portrait area image on the corresponding pixels of the second image to obtain the merged image.

In the present disclosure, two focus photos are taken by portrait focus and one with distance focus. The AI portrait segmentation is performed on the face focus image and merged to the distance focus image to obtain the merged image, thereby implementing the clear portrait and the clear background within the panoramic depth range.

In some implementations, a storage medium is further provided. The storage medium stores one or more programs, and the one or more programs can be executed by one or more processors to implement the steps in the panoramic depth image synthesis method of the present disclosure.

In some implementations, a smartphone is further provided. As shown in FIG. 2, the smartphone includes at least one processor 20; a display screen 21; and a memory 22. The smartphone can further include a communications interface 23 and a bus 24. The processor 20, the display screen 21, the memory 22, and the communication interface 23 can complete communication with each other through the bus 24. The display screen 21 is configured to display a user guidance interface preset in an initial setting mode. The communication interface 23 can transmit information. The processor 20 can call at least one logical instruction in the memory 22 to execute the methods in the above-mentioned embodiments.

Furthermore, the above-mentioned at least one logical instruction in the memory 22 can be implemented in the form of software functional units and can be stored in a computer-readable storage medium when sold or used as an independent product.

As a computer-readable storage medium, the memory 22 can be configured to store at least one software program or at least one computer-executable program, such as at least one program instruction or at least one module corresponding to the methods in the embodiments of the present disclosure. The processor 20 executes the at least one software program, at least one instruction, or at least one module stored in the memory 22 to execute at least one functional application and at least one data processing, that is, to implement any one of the methods in the above-mentioned embodiments.

The memory 22 can include a program storage area and a data storage area. The program storage area can store an operating system and at least one application program required for a function. The storage data area can store data created according to the use of a terminal device, etc. Furthermore, the memory 22 can include high-speed random access memory, and can further include non-volatile memory. For example, there are many media that can store program code, such as U disk, mobile hard disk, read-only memory (ROM), random access memory (Random Access Memory, RAM), magnetic disk or optical disk, or they can further be temporary state storage media.

Furthermore, a specific process of loading and executing multiple instruction processors in the above-mentioned storage medium and the terminal device is described in detail in the above-mentioned methods and is not described in detail herein.

It includes a processor adapted to implement each instruction; and a storage medium adapted to store a plurality of instructions. The instructions are adapted to be loaded by the processor and executed in the steps of the panoramic depth image synthesis method described in the disclosure.

Among, it includes a processor adapted to implement each instruction; and a storage medium adapted to store a plurality of instructions. The instructions are adapted to be loaded by the processor and executed in the steps of the panoramic depth image synthesis method described in the disclosure.

In summary, the present disclosure provides the panoramic depth image synthesis method. When the photos are taken, the focuses are locked to the face and the farthest point of the lens, respectively, to obtain the first image (the face focus image) and the second image (the distance focus image). The portrait segmentation processing is performed on the first image to obtain the portrait area image. The portrait area image and the second image are aligned and merged to obtain the fused image. In the present disclosure, by taking two focuses and photo, the portrait focus image and the distance focus image are user respectively. The face focus image is segmented by the AI and merged into the distance focus image, thereby achieving the clear portrait and the clear background within the panoramic depth range.

Finally, it should be noted that the above-mentioned embodiments are merely intended for describing the technical solutions of the present disclosure, but not for limiting the present disclosure. Although the present disclosure is described in detail with reference to the above-mentioned embodiments, those skilled in the art should understand that they can still make modifications to the technical solutions described in the above-mentioned embodiments or make equivalent replacements to some technical features thereof, without departing from the scope of the technical solutions of the embodiments of the present disclosure.

## Claims

1. A panoramic depth image synthesis method, wherein the method comprises the step of:
obtaining a first image and a second image correspondingly by locking focus in a face and a farthest point of a lens respectively when a photo is taken;
obtaining a portrait area image by performing portrait segmentation processing on the first image; and
obtaining a merged image by aligning and merging the portrait area image and the second image.

2. The panoramic depth image synthesis method of claim 1, wherein the first image is a face focus image, and the step of obtaining the face focus image comprises:
activating a camera and detecting whether a camera preview lens contains face data; and
obtaining the face focus image by activating a face focus mode to take a photo when it is detected that the camera preview lens contains the face data.

3. The panoramic depth image synthesis method of claim 2, wherein the second image is a distance focus image, and the step of obtaining the distance focus image comprises:
obtaining the distance focus image by activating a distance focus mode to take a photo, after the face focus mode is activated to take the photo to obtain the face focus image.

4. The panoramic depth image synthesis method of claim 2, wherein the method further comprises the step of:
obtaining a close-up image by activating a close-up focus mode when it is detected that the camera preview lens does not contain the face data.

5. The panoramic depth image synthesis method of claim 2, wherein the step of obtaining the portrait area image by performing the portrait segmentation processing on the first image comprises the steps of:
using annotated image data containing a face is used as a training sample to train an image segmentation neural network, and obtaining a trained image segmentation neural network; and
obtaining the portrait area image by inputting the first image into the trained image segmentation neural network to perform image segmentation.

6. The panoramic depth image synthesis method of claim 5, wherein the image segmentation neural network is an end-to-end trainable neural network.

7. The panoramic depth image synthesis method of claim 5, wherein the obtaining the portrait area image by inputting the first image into the trained image segmentation neural network to perform the image segmentation comprises:
transmitting the first image to a cloud through a network to indicate the cloud to use the image segmentation neural network to segment the first image to obtain the portrait area image; and
receiving the portrait area image returned by the cloud.

8. The panoramic depth image synthesis method of claim 5, wherein the obtaining the portrait area image by inputting the first image into the trained image segmentation neural network to perform the image segmentation comprises:
inputting the first image into a local computer device to indicate the computer device to use the image segmentation neural network to segment the first image to obtain the portrait area image; and
receiving the portrait area image returned by the local computer device.

9. The panoramic depth image synthesis method of claim 5, wherein the step of using the annotated image data containing the face as the training sample to train the image segmentation neural network and obtaining the trained image segmentation neural network comprises the steps of:
using the image segmentation network for obtaining a target area where at least one portrait in a training image is located, and obtaining position information of the portrait which needs to be segmented in the target area, wherein the training image is marked with position annotation information of the portrait which needs to be segmented; and
training the image segmentation neural network to obtain the trained image segmentation neural network based on the position information of the portrait which needs to be segmented and the position annotation information of the portrait which needs to be segmented.

10. The panoramic depth image synthesis method of claim 9, wherein a format of the position annotation information is a heat map.

11. The panoramic depth image synthesis method of claim 9, wherein a format of the position annotation information is a coordinate point.

12. The panoramic depth image synthesis method of claim 9, wherein the image segmentation neural network comprises at least a first sub-network, a second sub-network, and a third sub-network;
the using the image segmentation network for obtaining the target area where the at least one portrait in the training image is located comprises:
using the first sub-network for obtaining a feature map of the training image; and
using the second sub-network for processing the feature map of the training image to obtain the target area where the at least one portrait in the training image is located; and
the obtaining the position information of the portrait which needs to be segmented in the target area, comprises:
using the third sub-network for obtaining the position information of the portrait which needs to be segmented in the target area.

13. The panoramic depth image synthesis method of claim 12, wherein the using the second sub-network for processing the feature map of the training image to obtain the target area where the at least one portrait in the training image is located comprises:
using the second sub-network for dividing the sample image into multiple sections according to a target direction, wherein the target direction at least comprises a vertical direction or a horizontal direction;
for any one of the multiple sections, determining an ROI corresponding to the at least one portrait in any one of the multiple sections, and determining via a first boundary and a second boundary by the ROI, wherein directions of the first boundary and the second boundary are perpendicular to the target direction; and
determined the target area where the at least one portrait is located based on the ROI in the multiple sections.

14. The panoramic depth image synthesis method of claim 13, wherein the multiple sections are equal-width sections arranged in the vertical direction.

15. The panoramic depth image synthesis method of claim 13, wherein the multiple sections are equal-width sections arranged in the horizontal direction.

16. The panoramic depth image synthesis method of claim 9, wherein the training the image segmentation neural network to obtain the trained image segmentation neural network based on the position information of the portrait which needs to be segmented and the position annotation information of the portrait which needs to be segmented comprises:
obtaining a first loss function value based on the position information of the portrait which needs to be segmented and the position annotation information of the portrait which needs to be segmented;
determining whether the first loss function value satisfies a first preset condition; and
in response to the first loss function value not meeting the first preset condition and adjusting the parameter value of the image segmentation neural network based on the first loss function value, the following operation is performed iteratively until the first loss function value meets the first preset condition: the second sub-network is used in the image segmentation neural network to obtain the target area where the at least one portrait in the training image is located, and the third sub-network is used in the image segmentation neural network to obtain the position information of the portrait which needs to be segmented in the target area.

17. The panoramic depth image synthesis method of claim 5, wherein the step of inputting the first image into the trained image segmentation neural network to perform image segmentation and obtaining the portrait area image comprises:
obtaining the first image; and
using the trained image segmentation neural network to obtain the target area where the at least one portrait in the first image is located, to obtain the position information of the portrait which needs to be segmented in the target area, and to obtain the portrait area image based on the location information of the portrait.

18. The panoramic depth image synthesis method of claim 1, wherein the step of aligning and merging the portrait area image and the second image to obtain the merged image comprises:
using a pixel alignment algorithm, calculating an offset of the portrait area image relative to the second image, and performing a pixel replacement of the portrait area image on the corresponding pixels of the second image to obtain the merged image.

19. A storage medium, wherein the storage medium stores one or more programs, and the one or more programs are executed by one or more processors to implement the steps in the panoramic depth image synthesis method of any one of claims 1-18.

20. A smartphone, wherein the smartphone comprises a processor adapted to implement each instruction; and a storage medium adapted to store a plurality of instructions; and
wherein the instructions are adapted to be loaded by the processor and executed in the steps of the panoramic depth image synthesis method of any one of claims 1-18.
